# FASCICULE DE BREVET EUROPEEN

(11) **EP 0 767 026 B1**
(45) Date de publication et mention de la délivrance du brevet: **24.03.1999**
(21) Numéro de dépôt: 96402108.3
(22) Date de dépôt: 03.10.1996
(51) Int. Cl.: B23H 9/10, B23H 3/00, B23H 11/00

(54) **Procédé d'usinage par électrochimie**
Elektrochemisches Bearbeitungsverfahren
Electrochemical machining process

(30) Priorité: 04.10.1995 FR 9511648
(43) Date de publication de la demande: 09.04.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Arnau, Jean-Philippe, Pierre, Edmond, 95700 Roissy en France (FR)

(56) Documents cités:
- GB-A- 2 134 926
- US-A- 5 310 468

## Description

L'invention propose un procédé d'usinage de pièces par électrochimie, et plus particulièrement un procédé permettant d'usiner une partie de la pièce sans corroder une autre partie de cette même pièce qui est pourtant susceptible d'être au contact de l'électrolyte.
L'invention propose aussi un procédé économique et précis pour usiner par électrochimie des pièces métalliques, en particulier des aubes de turbomachine.

### ETAT DE LA TECHNIQUE ET PROBLEMES POSES

Lors de l'usinage d'une pièce métallique par électrochimie, l'électrolyte parcouru par le courant électrique peut atteindre des parties de la pièce en dehors de la zone en cours d'usinage et y provoquer une attaque non désirée. Traditionnellement, ces parties sont protégées de l'attaque électrochimique par enduction d'une couche en matériau isolant tel un vernis ou une résine. Un tel procédé présente cependant plusieurs inconvénients :
- Il est coûteux, car l'enduction doit comporter plusieurs couches pour éviter les microporosité, l'application de chaque couche nécessitant un temps supplémentaire de séchage ou de durcissement. De plus, lorsque l'usinage est terminé, la couche isolante ainsi appliquée doit être enlevée.
- Dans le cas où la pièce doit être tenue par ces parties protégées, par exemple à l'aide de mors, l'épaisseur imprécise du revêtement réduit la précision avec laquelle la pièce peut être positionnée pendant l'usinage et par répercussion la précision de cet usinage. De plus, le revêtement isolant peut s'écailler au contact des mors, provocant ainsi à nouveau des attaque électrochimiques non désirées.

Ce problème se pose en particulier dans le cas des aubes de turbomachine, par exemple du type comportant un pied, une plate-forme et une pale, l'aube devant être usinée selon le procédé général suivant :
- usinage du pied et d'une partie de la plate-forme,
- saisie de l'aube par le pied,
- usinage de la pale et du reste de la plate-forme par électrochimie, sans corroder le pied.

On connaît l'utilisation d'anodes auxiliaires en matériau électrochimiquement neutre comme le platine, ces anodes étant plongées dans l'électrolyte et portées à un potentiel positif supérieur à celui de la pièce à usiner. De telles anodes modifient les lignes de courant électrique dans leur voisinage et permettent par une disposition bien choisie d'empêcher l'attaque électrochimique sur certaines parties de la pièce.

L'inconvénient de telles anodes est qu'elles ne permettent pas une protection dans une région étendue, car il faudrait qu'elles aient une grande taille, ce qui en rendrait le coût prohibitif du fait des matériaux employés.

On connaît par le brevet US 5.310.468 un procédé d'usinage par électrochimie de la pale d'une aube de turbomachine, selon lequel les extrémités de l'aube déjà usinées sont protégées de l'attaque électrochimique chacune par un écran passif qui vient s'ajuster sur le contour de chaque plate-forme. Ce procédé présente cependant deux inconvénients :
- Afin que le contour de chaque plate-forme ne soit pas attaqué du fait du jeu inévitable entre ce contour et l'écran sensé le protéger, l'écran est en matériau électrochimiquement usinable et est donc rapidement consommable. De plus, sa forme en anneau rectangulaire le rend délicat à usiner.
- L'écran doit comporter un bourrelet faisant saillie sur la plate-forme, ce qui empêche l'usinage simultané de la pale et de la surface de la plate-forme adjacente à la pale.

### RESUME DE L'INVENTION

L'invention propose un procédé d'usinage électrochimique permettant d'usiner une partie de la pièce sans atteindre une autre partie de cette même pièce qui est pourtant susceptible d'être au contact de l'électrolyte, ces deux parties étant séparées par une ligne géométrique de transition fermée à la surface extérieure de la pièce. Selon l'invention :
a) On dispose dans l'espace de travail, par exemple la cuve d'électrolyse, un écran électriquement isolant divisant cet espace en deux demi-espaces dont l'un contient les électrodes d'usinage, cet écran comportant une ouverture dont la forme est complémentaire de celle de la ligne de transition avec un jeu réduit.
b) On dispose la pièce à usiner dans l'espace de travail, la pièce étant positionnée dans l'ouverture de l'écran au niveau de la ligne de transition, la partie à usiner étant dans le demi-espace des cathodes et la partie à préserver dans l'autre demi-espace,
c) L'ouverture entoure la ligne de transition avec un jeu réduit, l'ouverture étant conductrice sur toute la périphérie et au moins une partie de l'épaisseur de l'écran, la partie conductrice de l'ouverture étant pendant l'usinage électrochimique portée à un potentiel électrique positif par rapport à celui de la pièce.

On comprend que l'écran isolant empêche pendant l'usinage la circulation du courant électrique entre la partie de la pièce à préserver et les cathodes.

On comprend que l'ouverture de l'écran rendue conductrice et portée à un potentiel électrique supérieur à celui de la pièce joue le rôle d'une anode et supprime le courant électrique allant de la partie à protéger de la pièce vers la cathode en passant par l'ouverture, ceci en créant des lignes de courant allant de ladite anode vers la pièce.

On comprend que le procédé est applicable aux pièces susceptibles d'être disposée dans l'ouverture d'un écran au niveau de la ligne de transition séparant une partie à préserver d'une autre partie à usiner, avec un jeu réduit entre ladite ouverture et ladite ligne de transition.
Dans le cas où la pièce ne passerait pas dans l'ouverture, du fait de la section trop importante de ses extrémités, l'écran et l'ouverture seront avantageusement divisés en au moins deux parties jointives, les lignes de séparation passant par l'ouverture. La mise en place d'une pièce dans l'ouverture de l'écran s'effectue alors comme suit :
- séparation des différentes parties de l'écran,
- disposition de la pièce dans l'ouverture,
- réunion des différentes parties de l'écran.

Dans un mode de réalisation préféré, l'écran est maintenu par des moyens indépendants de la pièce afin de faciliter la mise en place et le retrait dans l'espace de travail de ladite pièce et dudit écran.

L'écran est aussi maintenu indépendamment des cathodes, ce qui autorise une grande latitude dans le choix de la forme et de la trajectoire des cathodes en fonction des formes de pièces à obtenir.

L'invention propose aussi un procédé économique d'usinage électrochimique d'une pièce telle que décrite précédemment. Selon l'invention, le procédé comporte notamment les opérations suivantes :
a) Usinage d'une première partie de la pièce à la cote définitive,
b) Positionnement de la pièce dans l'ouverture de l'écran, et maintien de la pièce directement sur la partie usinée non recouverte,
c) Usinage d'une seconde partie de la pièce.

L'invention propose aussi un procédé économique d'usinage d'une aube comportant d'une extrémité à l'autre successivement un pied, une plate-forme délimitée extérieurement par un contour, ainsi qu'une pale, ladite plate-forme comportant aussi une surface adjacente à ladite pale. Selon l'invention, le procédé comporte notamment les opérations suivantes :
a) Usinage du pied et du contour de la plate-forme à la cote finie,
b) Introduction de la pale par l'ouverture de l'écran jusqu'au niveau du contour de la plate-forme,
c) Usinage de la pale et de la surface de la plate-forme adjacente à la pale par plongée de deux électrodes.

L'invention présente sur l'art antérieur l'avantage d'être à la fois économique et de permettre une délimitation précise des zones à usiner et des zones à préserver de la corrosion, ces dernières pouvant être d'une grande étendue sans entraîner une surconsommation de courant électrique et un échauffement excessif de l'électrolyte.

L'invention autorise une grande latitude dans la saisie des pièces et les mouvements des cathodes, et présente sur le procédé divulgué par le brevet US 5.310.468 l'avantage d'écrans moins précis à réaliser et indéfiniment réutilisables, ces mêmes écrans ne présentant pas de saillies ou de bourrelets gênant l'usinage de surfaces au voisinage de la ligne de transition entre la partie de la pièce à usiner et la partie à préserver de la corrosion.

### DESCRIPTION DES FIGURES

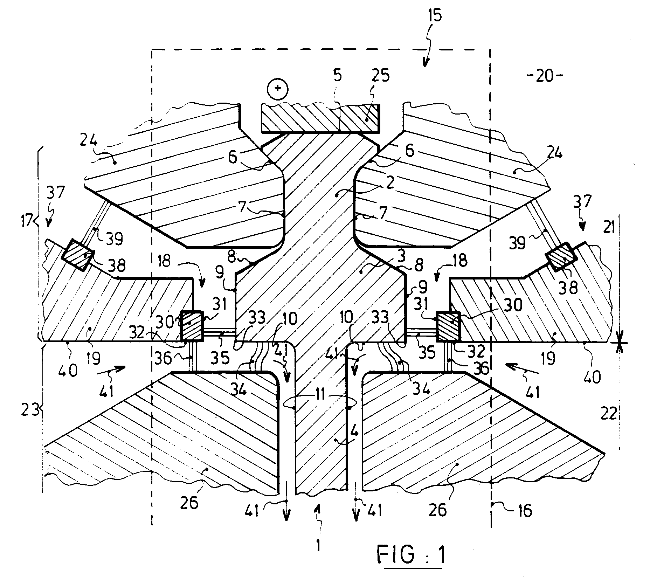

L'invention sera mieux comprise et les avantages qu'elle procure apparaîtront plus clairement au vu d'un exemple détaillé de réalisation et de la figure annexée représentant une aube de turbomachine en cours d'usinage par électrochimie. On notera que par mesure de clarté, les jeux entre la pièce et l'ouverture de l'écran d'une part, et les cathodes d'autre part, ainsi que les surépaisseurs d'usinage ont été augmentés. Par mesure de clarté aussi, les lignes de courant ne sont que partiellement représentées.

### DESCRIPTION DETAILLEE

On se reportera à la figure unique. L'aube 1 comporte successivement un pied 2, une plate-forme 3 et une pale 4. Le pied 2 est en queue d'aronde et comporte une extrémité bombée 5, deux flancs obliques 6 en regard de la plate-forme 3, lesdits flancs obliques 6 se prolongeant vers la plate-forme 3 par deux flancs 7 approximativement parallèles.
La plate-forme 3 est élargie et comporte successivement deux flancs 8 adjacents aux flancs 7 et tournés vers le pied 2, un contour 9 cylindrique ou légèrement tronconique avec une section en parallélépipède rectangle, et deux surfaces 10 dans le prolongement l'une de l'autre et adjacentes aux flancs 11 de la pale 4.

L'aube 1 est usinée dans le brut 15 conformément au procédé général suivant :
a) Saisie du brut 15 par son extrémité 16 du côté de la pale 4.
b) Usinage de la première partie 17 de l'aube 1, soit le pied 2 ainsi que les flancs 8 et le contour 9 de la plate-forme 3. L'usinage du contour 9 est prolongé au delà des futures surfaces 10.
c) Positionnement de l'aube 1 dans l'ouverture 18 de l'écran isolant 19, ledit écran 19 divisant l'espace de travail 20 en un premier demi-espace 21 dans lequel se trouvera la première partie 17 de l'aube 1 et en un deuxième demi-espace 22 dans lequel se trouvera l'extrémité 16 du brut dans laquelle sera usinée la deuxième partie de l'aube 1, soit la pale 4 et les surfaces 10 adjacentes à ladite pale.
d) Saisie de l'aube 1 par le pied 2 à l'aide de deux mors 24 enserrant l'aube 1 sur les flancs 6 et 7, un poussoir 25 appuyant sur l'extrémité bombée 5 de sorte que les flancs obliques 6 arrivent bien au contact des mors 24 afin d'assurer un positionnement précis de l'aube 1, le poussoir 25 et/ou les mors 24 assurant l'arrivée du courant électrique sur l'aube 1.
e) Usinage de la seconde partie 23 de l'aube 1 par le rapprochement de deux cathodes 26 pour former la pale 4 combiné avec la translation de ces cathodes 26 vers la plate-forme 3 afin de former les surfaces 10 adjacentes à la pale 4, lesdites cathodes 26 ayant une forme complémentaire à celle de la pale 4 et des surfaces adjacentes 10.

On décrira maintenant la structure et le fonctionnement de l'écran 19 :
L'ouverture 18 de l'écran 19 comporte un anneau 30 formant anode en matériau bon conducteur de l'électricité et électrochimiquement neutre tel le platine. L'anode 30 a une section rectangulaire et comporte une surface intérieure 31 entourant l'aube 1 au niveau du contour 9, ladite surface 31 ayant une forme complémentaire audit contour 9 et formant avec lui un jeu réduit e. L'anode 30 comporte aussi une surface latérale 32 adjacente à la surface intérieure 31 et située dans le prolongement des surfaces adjacentes 10 de l'aube 1.
On référencera 33 la ligne à l'intersection du contour 9 et des surfaces adjacentes 10, ladite ligne 33 marquant la transition entre la première partie 17 de l'aube 1 à protéger et la seconde partie 23 à usiner par électrochimie.
Pendant l'usinage de la pale 4 et des surfaces adjacentes 10, les lignes de courant électrique 34 partent de ladite pale 4 et desdites surfaces 10 portées à un potentiel positif, vers les cathodes 26 portées à un potentiel négatif.
L'anode 30 étant elle-même portée à un potentiel positif par rapport à l'aube 1, des lignes de courant 35 partent de la surface intérieure 31 vers le contour 9, et d'autres lignes de courant 36 partent de la surface latérale 32 vers les cathodes 26. Les lignes de courant 34 partent des surfaces adjacentes 10 jusqu'à la ligne de transition 33, alors que les lignes de courant 35 arrivent sur le contour 9 jusqu'à cette même ligne de transition 33 avec un effet de bord très limité.

On comprend que pendant l'usinage de la seconde partie 23 jusqu'à la ligne de transition 33, des lignes de courant ne peuvent se former depuis la première partie 17 ,vers les cathodes 26 en passant par l'ouverture 18 du fait de la présence des lignes de courant 35 ainsi formées.
Il peut arriver que du fait des dimensions limitées de l'écran 19 par rapport au niveau de l'électrolyte, des lignes de courant non référencées peuvent partir de la première partie 17 de l'aube 1 et arriver sur les cathodes 26 en contournant l'écran 19 par l'extérieur. Bien que l'intensité correspondante soit faible du fait de la grande longueur des lignes de courant, celles-ci peuvent provoquer une corrosion non désirée. Pour remédier à cela, on disposera avantageusement vers la périphérie 37 de l'écran un second anneau formant anode analogue dans sa constitution à l'anneau 30 et placé en regard du pied 2, des mors 24 ou du poussoir 25. Cette seconde anode 38 portée à un potentiel positif par rapport à la pièce 1 crée des lignes de courant 39 allant de ladite anode 38 vers le pied 2, les mors 24 ou le poussoir 25, empêchant ainsi de la même manière la corrosion de ces objets.

On remarquera que l'anode 38 n'a pas à créer une protection contre la corrosion avec une limite précise, au contraire de l'anode 30. De ce fait :
a) Alors que l'anode 30 forme avec le contour 9 ou la ligne de transition 33 un jeu limité compris de préférence entre 0,3 et 1 mm.
b) La seconde anode 38 peut se trouver à une distance importante des surfaces à protéger.

Les cathodes 26 sont connectées à un générateur électrique fournissant par rapport à la pièce 1 une tension de l'ordre de -20V.
L'anode 30 est connectée à un générateur électrique fournissant par rapport à la pièce 1 une tension électrique au moins égale à 3V correspondant, compte tenu du jeu e, à un compromis entre l'effet de bord au voisinage de la ligne de transition 33, la commodité pour passer la pièce 1 dans l'ouverture 18 et la consommation supplémentaire de courant électrique.

L'écran est réalisé en matériau électriquement isolant et résistant à l'électrolyte tel la résine époxyde renforcée par de la fibre de verre.
La fixation des anodes 30 et 38 sera avantageusement réalisée par encastrement et collage et renforcée par des clous en un matériau semblable à celui desdites anodes, afin de résister eux-même à la corrosion.

Avantageusement, la surface 40 de l'écran isolant 19 est dans le prolongement des surfaces adjacentes 10 de l'aube 1 et de la surface latérale 32 de l'anode 30, ladite surface 40 pouvant être plane et perpendiculaire à l'aube 1 au moins dans le voisinage de cette aube. Ceci permet une circulation régulière 41 de l'électrolyte qui pénétrera entre les surfaces adjacentes 10 et les cathodes 26.

L'invention n'est pas limitée aux réalisations présentées, mais en couvre au contraire toutes les variantes qui pourraient leur être apportées sans sortir de leur cadre comme défini par les revendications.

En particulier, la surface 40 peut avoir une forme convexe permettant de dégager le demi-espace 22 dans lequel se trouve les cathodes.

Certains types de pièces peuvent conduire à utiliser plusieurs écrans. C'est le cas en particulier des pièces dont la partie à usiner est adjacente à deux parties à préserver, comme par exemple l'aube du brevet US 5.310.468. Selon l'invention, une telle aube pourrait être réalisée de la façon suivant à partir d'un lopin :
a) Usinage des plates-formes aux deux extrémités, ainsi que des contours de ces plates-formes.
b) Maintien de l'aube serrée sur ses extrémités usinées entre deux mors, les contours de plates-formes étant chacun dans l'ouverture d'un écran conforme à l'invention.
c) Usinage de la pale.

## Revendications

1. Procédé d'usinage d'une pièce par électrochimie, ladite pièce (1) comportant notamment une première partie (17) susceptible d'être au contact de l'électrolyte et une seconde partie (23) à usiner, lesdites parties (17) et (23) étant séparées par une ligne géométrique de transition (33) à la surface de la pièce (1), ladite pièce (1) étant susceptible d'être disposée dans l'ouverture d'un écran au niveau de la ligne de transition (33), caractérisé en ce que :
a) On dispose la pièce (1) dans l'ouverture (18) d'un écran (19) électriquement isolant, ladite ouverture (18) ayant une forme complémentaire de la ligne de transition (33), ladite ouverture (18) entourant ladite pièce (1) au niveau de la ligne de transition (33) et formant avec ladite ligne (33) un jeu e réduit, ledit écran (19) divisant l'espace de travail (20) en un premier demi-espace (21) dans lequel se trouve la première partie (17) et un second demi-espace (22) dans lequel se trouve la seconde partie (23) à usiner de la pièce (1) ainsi qu'au moins une cathode (26) d'usinage, ledit écran (19) empêchant le passage de courant électrique de la première partie (17) aux cathodes d'usinage (26).
b) La périphérie de l'ouverture (18) est conductrice sur au moins une partie (31) de l'épaisseur de l'écran (19) et portée à un potentiel électrique positif supérieur à celui de la pièce (1), afin de créer des lignes de courant électrique (35) allant de ladite périphérie (31) formant anode à ladite partie (17) au voisinage de la ligne de transition (33).

2. Procédé selon la revendication 1, caractérisé en ce que la partie conductrice (31) est en matériau électrochimiquement neutre, afin de ne pas être corrodée elle-même.

3. procédé selon la revendication 1 ou 2, caractérisé en ce que l'écran (19) est tenu indépendant de la pièce (1), afin de faciliter l'introduction et le retrait de ladite pièce (1).

4. procédé selon l'une quelconque des revendications 1 à 3, caractérisé en ce que l'écran (19) est tenu indépendamment des cathodes (26).

5. procédé selon l'une quelconque des revendications 1 à 4, caractérisé en ce que l'écran (19) et l'ouverture (18) sont divisés en parties jointives afin de permettre la disposition dudit écran (19) autour de pièces (1) ne passant pas par l'ouverture (18).

6. procédé selon l'une quelconque des revendications 1 à 5, caractérisé en ce que le jeu e entre la pièce (1) et la partie conductrice (31) est compris entre 0,3 et 1 mm.

7. Procédé selon l'une quelconque des revendications 1 à 6, caractérisé en ce que la partie conductrice (31) est portée à un potentiel de +3 à +10 V par rapport à la pièce (1).

8. procédé selon l'une quelconque des revendications 1 à 7, caractérisé en ce que l'écran (19) comporte au voisinage de sa périphérie (37) une seconde anode (38) portée à un potentiel positif supérieur à celui de la pièce (1).

9. procédé selon l'une quelconque des revendications 1 à 7, caractérisé en ce qu'il comporte notamment les opérations suivantes :
a) Usinage d'une première partie (17) de la pièce (1) à la cote définitive,
b) Disposition de la pièce (1) dans l'ouverture (18) de l'écran (19) et maintien de ladite pièce (1) par ladite première partie (17),
c) Usinage par électrochimie d'une seconde partie (23) de la pièce (1) avec les cathodes (26), ladite première partie (17) étant dans la demi-espace (21) ne contenant pas les cathodes (26)

10. procédé selon l'une quelconque des revendications 1 à 9, la pièce (1) étant une aube de turbomachine, ladite aube (1) comportant un pied (2), une plate-forme (3) bordée par un contour (9) et une pale (4), ladite plate-forme (3) comportant aussi une surface (10) adjacente à la pale (4), caractérisé en ce qu'il comporte notamment les opérations suivantes :
a) Usinage du pied (2) et du contour (9) de la plate-forme (3) aux cotes définitives,
b) Disposition de l'aube (1) dans l'ouverture (18) de l'écran (19), ladite ouverture (18) étant positionnée au niveau du contour (9), ladite aube (1) étant tenue par le pied (2) dans le demi-espace (21) ne contenant pas les cathodes (26),
c) Usinage par électrochimie de la pale (4) et de la surface (10) de la plate-forme (3) adjacente à la pale (4),

11. Procédé selon la revendication 10, caractérisé en ce que la pale (4) et la surface (10) sont usinées simultanément par deux cathodes (26) en plongée.

12. Procédé selon la revendication 10, caractérisé en ce que la surface (40) de l'écran (19) tournée vers les cathodes (26) est dans le prolongement de la surface (10) de la plate-forme (3) adjacente à la pale (4), afin d'assurer un écoulement régulier de l'électrolyte arrivant entre la surface (10) et les cathodes (26).

## Claims

1. Process for electrochemically machining a workpiece, the said workpiece (1) having in particular a first part (17) capable of being in contact with the electrolyte and a second part (23) to be machined, the said parts (17) and (23) being separated by a geometrical transition line (33) on the surface of the workpiece (1), the said workpiece (1) being capable of being placed in the opening of a screen level with the transition line (33), characterized in that :
a) The workpiece (1) is placed in the opening (18) of an electrically insulating screen (19), the said opening (18) having a shape complementary to the transition line (33), the said opening (18) surrounding the said workpiece (1) level with the transition line (33) and forming, with the said line (33), a small gap e, the said screen (19) dividing the workspace (20) into a first half-space (21) in which the first part (17) lies and a second half-space (22) in which the second part (23) to be machined of the workpiece (1) as well as at least one machining cathode (26) lie, the said screen (19) preventing the passage of electric current from the first part (17) to the machining cathodes (26);
b) The periphery of the opening (18) is conducting over at least part (31) of the thickness of the screen (19) and is raised to a positive electrical potential greater than that of the workpiece (1) so as to create lines of electric current (35) going from the said periphery (31) which forms the anode to the said part (17) near the transition line (33).

2. Process according to Claim 1, characterized in that the conducting part (31) is made of an electrochemically inert material so that it itself is not corroded.

3. Process according to Claim 1 or 2, characterized in that the screen (19) is held independently of the workpiece (1) so as to facilitate the insertion and removal of the said workpiece (1).

4. Process according to any one of Claims 1 to 3, characterized in that the screen (19) is held independently of the cathodes (26).

5. Process according to any one of Claim 1 to 4, characterized in that the screen (19) and the opening (18) are divided into contiguous parts so as to allow the said screen (19) to be placed around workpieces (1) that do not pass through the opening (18).

6. Process according to any one of Claims 1 to 5, characterized in that the gap e between the workpiece (1) and the conducting part (31) is between 0.3 and 1 mm.

7. Process according to any one of Claims 1 to 6, characterized in that the conducting part (31) is raised to a potential of +3 to +10 V with respect to the workpiece (1).

8. Process according to any one of Claims 1 to 7, characterized in that the screen (19) has, in the vicinity of its periphery (37), a second anode (38) raised to a positive potential greater than that of the workpiece (1).

9. Process according to any one of Claims 1 to 7, characterized in that it comprises in particular the following operations:
a) The machining of a first part (17) of the workpiece (1) to the final dimension;
b) The placing of the workpiece (1) in the opening (18) of the screen (19) and the holding of the said workpiece (1) by the said first part (17);
c) The electrochemical machining of a second part (23) of the workpiece (1) using the cathodes (26), the said first part (17) being in the half-space (21) not containing the cathodes (26).

10. Process according to any one of Claims 1 to 9, the workpiece (1) being a turbomachine blade, the said blade (1) having a root (2), a platform (3) with an outline (9) and a blade section (4), the said platform (3) also having a surface (10) adjacent to the blade section (4), characterized in that it comprises in particular the following operations:
a) The machining of the root (2) and of the outline (9) of the platform (3) to the final dimensions;
b) The placing of the blade (1) in the opening (18) of the screen (19), the said opening (18) being positioned level with the outline (9), the said blade (1) being held by the root (2) in the half-space (21) not containing the cathodes (26);
c) The electrochemical machining of the blade section (4) and of the surface (10) of the platform (3) adjacent to the blade section (4).

11. Process according to Claim 10, characterized in that the blade section (4) and the surface (10) are machined simultaneously by two infeed cathodes (26).

12. Process according to Claim 10, characterized in that the surface (40) of the screen (19) facing the cathodes (26) is in the extension of the surface (10) of the platform (3) adjacent to the blade section (4) so as to ensure uniform flow of the electrolyte arriving between the surface (10) and the cathodes (26).

## Patentansprüche

1. Verfahren zur elektrochemischen Bearbeitung eines Werkstücks, wobei das Werkstück (1) einen mit dem Elektrolyten kontaktierbaren ersten Teil (17) und einen zu bearbeitenden zweite Teil (23) aufweist, wobei diese Teile (17 und 23) durch eine geometrische Übergangslinie (33) an der Oberfläche des Werkstücks (1) voneinander getrennt sind und wobei das Werkstück (1) in Höhe der Übergangslinie (33) in der Öffnung eines Schirms angeordnet werden kann,
**dadurch gekennzeichnet**,
a) daß man das Werkstuck (1) in der Öffnung (18) eines elektrisch isolierenden Schirms (19) anordnet, wobei die Öffnung (18) eine zu der Übergangslinie (33) komplementäre Form hat, wobei die Öffnung (18) das Werkstück (1) in Höhe der Übergangslinie (33) umschließt und mit dieser Linie (33) ein kleines Spiel (i) bildet, wobei der Schirm (19) den Arbeitsraum (20) in einen ersten Halbraum (21), in dem sich der erste Teil (17) befindet, und einen zweiten Halbraum (22) unterteilt, in dem sich der zu bearbeitende zweite Teil (23) des Werkstücks (1) und wenigstens eine Bearbeitungskathode (26) befinden, und wobei der Schirm (19) den Durchgang von elektrischem Strom von dem ersten Teil (17) zu den Bearbeitungskathoden (26) verhindert, und
b) daß die Peripherie der Öffnung (18) über zumindest einen Teil (31) der Dicke des Schirms (19) leitfähig und auf ein positives elektrisches Potential gelegt wird, das größer ist als das Potential des Werkstücks (1), um elektrische Stromlinien (35) zu erzeugen, die von der die Anode bildenden Peripherie (31) zu dem genannten Teil (17) in der Nähe der Übergangslinie (33) verlaufen.

2. Verfahren nach Anspruch 1, dadurch gekennzeichnet, daß der leitfähige Teil (31) aus einem elektrochemisch neutralen Material besteht, damit er nicht selbst korrodiert wird.

3. Verfahren nach Anspruch 1 oder 2, dadurch gekennzeichnet, daß der Schirm (19) unabhängig von dem Werkstück (1) gehalten wird, um das Einführen und das Herausnehmen des Werkstücks (1) zu erleichtern.

4. Verfahren nach einem der Ansprüche 1 bis 3, dadurch gekennzeichnet, daß der Schirm (19) unabhängig von den Kathoden (26) gehalten wird.

5. Verfahren nach einem der Ansprüche 1 bis 4, dadurch gekennzeichnet, daß der Schirm (19) und die Öffnung (18) in aneinanderstoßende Teile unterteilt sind, um das Anordnen des Schirms (19) um Werkstücke (1) zu ermöglichen, die nicht durch die Öffnung (18) passen.

6. Verfahren nach einem der Ansprüche 1 bis 5, dadurch gekennzeichnet, daß das Spiel (i) zwischen dem Werkstück (1) und dem leitfähigen Teil (31) im Bereich zwischen 0,3 mm und 1 mm liegt.

7. Verfahren nach einem der Ansprüche 1 bis 6, dadurch gekennzeichnet, daß der leitfähige Teil (31) relativ zu dem Werkstück auf ein Potential von +3V bis +10V gebracht wird.

8. Verfahren nach einem der Ansprüche 1 bis 7, dadurch gekennzeichnet, daß der Schirm (19) in der Nähe seiner Peripherie (37) eine zweite Anode (38) besitzt, die auf ein positives Potential gebracht wird, das über dem Potential des Werkstucks (1) liegt.

9. Verfahren nach einem der Ansprüche 1 bis 7, dadurch gekennzeichnet, daß es folgende Verfahrensschritte umfaßt:
a) Bearbeiten eines ersten Teils (17) des Werkstücks (1) auf Endmaß,
b) Anordnen des Werkstücks (1) in der Öffnung (18) des Schirms (19) und Halten des Werkstücks (1) durch den genannten ersten Teil (17),
c) elektrochemisches Bearbeiten eines zweiten Teils (23) des Werkstücks (19) mit den Kathoden (26), wobei der erste Teil (17) sich in dem Halbraum (21) befindet, der die Kathoden (26) nicht enthält.

10. Verfahren nach einem der Ansprüche 1 bis 9, wobei das Werkstück (1) eine Turbomaschinenschaufel ist, die einen Schaufelfuß (2), einen von einer Außenlinie (9) begrenzte Plattform (3) und ein Schaufelblatt (4) aufweist, wobei die Plattform (3) außerdem eine an das Schaufelblatt (4) angrenzende Oberfläche (10) besitzt,
gekennzeichnet durch folgende Verfahrensschritte:
a) Bearbeiten des Schaufelfußes (2) und der Außenlinie (9) der Plattform (3) auf Endmaße,
b) Anordnen der Schaufel (1) in der Öffnung (18) des Schirms (19), wobei diese Öffnung (18) in Höhe der Außenlinie (9) angeordnet ist und die Schaufel (1) durch den Schaufelfuß (2) in dem Halbraum (21) gehalten wird, der die Kathoden (26) nicht enthält,
c) elektrochemisches Bearbeiten des Schaufelblatts (4) und der an das Schaufelblatt (4) angrenzenden Oberfläche (10) der Plattform (3).

11. Verfahren nach Anspruch 10, dadurch gekennzeichnet, daß das Schaufelblatt (4) und die Oberfläche (10) gleichzeitig durch zwei Tauchkathoden (26) bearbeitet werden.

12. Verfahren nach Anspruch 10, dadurch gekennzeichnet, daß die den Kathoden (26) zugekehrte Oberfläche (40) des Schirms (19) in der Verlängerung der an das Schaufelblatt (4) angrenzenden Oberfläche (10) der Plattform (3) liegt, um eine regelmäßige Strömung des zwischen die Oberfläche (10) und die Kathoden (26) gelangenden Elektrolyten zu gewährleisten.
